# EUROPEAN PATENT APPLICATION

(11) **EP 3 335 579 A1**
(43) Date of publication of application: **20.06.2018**
(21) Application number: 17174044.2
(22) Date of filing: 01.06.2017
(51) Int. Cl.: A23P 20/20, B33Y 10/00, B33Y 30/00, B33Y 40/00

(54) **APPARATUS AND METHOD FOR 3D PRINTING OF ARTICLES**

(30) Priority: 16.12.2016 US 201662435483 P
(71) Applicant: Linde Aktiengesellschaft, 80331 München (DE)
(72) Inventor: MOLNAR, Istvan, 6230 Soltvadkert (HU)
(74) Representative: Hofmann, Andreas

(57) **Abstract**

In order to overcome the limitations and problems that earlier apparatus and methods have experienced, an apparatus (10) for 3D printing an article (12), in particular a food article, is proposed, said apparatus (10) comprising:
- a housing (14) comprising at least one gas inlet (16), the housing (14) defining a chamber (20) therein substantially isolated from an external environment (32);
- at least one 3D printing head (28) disposed within the chamber (20), for 3D printing the article (12) within the chamber (20); and
- a source (22) of a protective gas in fluid communication with the at least one gas inlet (16) for being introduced into the chamber (20) in an amount sufficient to displace atmosphere in the chamber (20) and to protect the article (12) from detrimental effects of the displaced atmosphere.

A related method of 3D printing an article (12), in particular a food article, is also proposed.

## Description

### Technical field of the present invention

The present invention relates an apparatus for 3D printing an article, in particular a food article.

The present invention further relates to a method of 3D printing an article, in particular a food article.

### Technological background of the present invention

Additive manufacturing methods of three-dimensional (3D) printing may include layer deposition or other techniques to create a 3D article of manufacture. These methods are capable of producing 3D articles from many materials, and may use granular solids or paste-like liquids as a starting material from which the 3D article is manufactured. These 3D printing methods may be used to create 3D printed food products (3D food printing).

However, 3D food printing creates problems which may not be encountered in 3D printing of other articles. For example, 3D food printing results in large amounts of exposed surface area of the printing material during and/or after the printing operation, which may lead to discoloration, oxidation of vitamins or other compounds, and/or microbial growth; the latter being especially detrimental to human safety.

Therefore, apparatus and methods are needed which may at least partially mitigate these problems.

### Disclosure of the present invention: object, solution, advantages

Starting from the disadvantages and shortcomings as described above as well as taking the prior art as discussed into account, an object of the present invention is to overcome the limitations and problems that earlier apparatus and methods have experienced.

This object is accomplished by an apparatus comprising the features of claim 1 as well as by a method comprising the features of claim 10. Advantageous embodiments, expedient improvements and other optional features of the present invention are set forth herein and disclosed in the respective dependent claims.

There is provided herein a protective atmosphere for 3D printing, in particular for 3D food printing.

More particularly, provided is an apparatus for 3D printing an article, in particular a food article, comprising: a housing comprising at least one gas inlet, the housing defining a chamber therein substantially isolated from an external environment; at least one 3D printing head disposed within the chamber, for 3D printing the article within the chamber; and a source of a protective gas in fluid communication with the at least one gas inlet for being introduced into the chamber in an amount sufficient to displace atmosphere in the chamber and protect the article from detrimental effects of the displaced atmosphere.

In certain embodiments, the apparatus may further comprise at least one gas outlet.

This at least one gas outlet may be in fluid communication with the chamber and the external environment for exhausting gas from the chamber such that the chamber may include substantially only the protective gas.

Also provided is a method of 3D printing an article, in particular a food article, comprising: performing a 3D printing operation for producing the article; substantially isolating the 3D printing operation and the article from an external environment; and providing a protective gas to the 3D printing operation for surrounding the article with substantially only the protective gas for protecting said article.

In certain embodiments of the apparatus and/or of the method, the protective gas may comprise at least one inert gas.

In certain embodiments of the apparatus and/or of the method, the protective gas may comprise at least one of argon, nitrogen, or carbon dioxide. More particularly, the protective gas may comprise from 0% to about 100% argon, from 0% to about 100% nitrogen, and from 0% to about 30% carbon dioxide, by volume based on the total volume of the protective gas; even more specifically, at least about 70% by volume of the protective gas may comprise at least one of argon or nitrogen.

In certain embodiments of the apparatus and/or of the method, the temperature of the protective gas may be from about 2°C to about 25°C.

In certain embodiments of the apparatus and/or of the method, the protective gas may include at least one of: at least one gas, at least one suspended liquid, and/or at least one suspended solid, which may at least partially provide an antimicrobial effect or other beneficial property to the protective gas.

As used herein, the term "substantially" refers to a degree of deviation that is sufficiently small so as to not measurably detract from the identified property or circumstance. The exact degree of deviation allowable may in some cases depend on the specific context.

As used herein, "in fluid communication" means that fluid may be conveyed by direct or indirect connections which allow the fluid to pass from one component to another. Such connections may comprise conduits or other known means by which the components may be connected to deliver a fluid from one component to another.

Three-dimensional (3D) food printing uses materials (a material may include one or more than one ingredient), such as fresh, natural ingredients, processed so that the materials may be extruded through a nozzle to form a 3D printed food product. The nozzle is part of a 3D printing head which is capable of extruding the material through the nozzle.

Via motion of the 3D printing head and/or other components of the 3D printing apparatus, layers of the material are printed or laid down sequentially by the nozzle to form or produce the 3D food product.

In certain embodiments of the apparatus and/or of the method, at least one food-grade binder may be used to provide the desired consistency to the 3D food product.

The 3D printing apparatus may be capable of utilizing one or a plurality of materials to form a single 3D food product.

During the 3D food printing operation, the ingredient(s) being printed may be exposed to surrounding air, in particular the oxygen content of the air. Exposure to air and/or oxygen in 3D food printing may be substantially higher than exposure during conventional food product production.

Alternatively or additionally, exposure to air and/or oxygen in 3D food printing may be more deleterious to the 3D printed food product than to other 3D printed articles. The increased exposure experienced by 3D printed food products may enable oxidation and may cause the products to lose nutritional value, such as degradation of vitamins or other beneficial compounds present within the food products.

In certain embodiments of the apparatus and/or of the method, it may be particularly important to protect the nutritional value of the 3D printed food products, such as for consumer groups having special dietary requirements, for example elderly people or people in extreme locations or conditions (for example submarine personnel or remote scientific research personnel).

In particular, the present apparatus and method embodiments provide a protective atmosphere during the 3D food printing operation, such as by using industrial gases.

While the subject technology embodiments may be described herein with regard to 3D food printing in particular, it is contemplated that the subject technology may be used in 3D printing any article which may encounter problems similar to those encountered in 3D food printing, as described herein. The subject technology embodiments may be used with other than 3D printing or 3D food printing. Examples include but are not limited to medicines, pharmaceuticals, preservative, etc.

### Brief description of the drawings

For a more complete understanding of the present embodiment disclosures and as already discussed above, there are several options to embody as well as to improve the teaching of the present invention in an advantageous manner. To this aim, reference may be made to the claims dependent on claim 1 as well as on claim 10; further improvements, features and advantages of the present invention are explained below in more detail with reference to a particular and preferred embodiment by way of non-limiting example and to the appended drawing figures taken in conjunction with the following description of exemplary embodiment, of which:

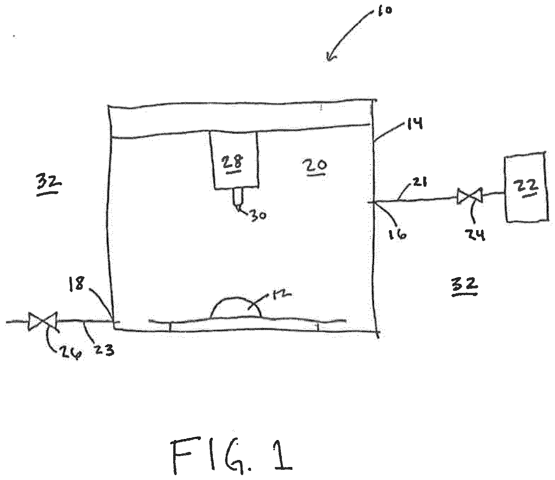

- FIG. 1: shows a schematic view of an illustrative embodiment of an apparatus according to the present invention, said embodiment working according to the method of the present invention.

The accompanying drawings are included to provide a further understanding of the apparatus and method(s) provided herein and are incorporated in and constitute a part of this specification. The drawings illustrate an embodiment of the apparatus and method(s) provided herein and, together with the description, serve to explain the principles described herein but are not intended to limit the specification or any of the claims.

### Detailed description of the drawings;

### best way of embodying the present invention

Before explaining the present inventive embodiment in detail, it is to be understood that the embodiment is not limited in its application to the details of construction and arrangement of parts illustrated in the accompanying drawing, since the present invention is capable of other embodiments and of being practiced or carried out in various ways. Also, it is to be understood that the phraseology or terminology employed herein is for the purpose of description and not of limitation.

In the following description, terms such a horizontal, upright, vertical, above, below, beneath and the like, are used solely for the purpose of clarity illustrating the present invention and should not be taken as words of limitation. The drawings are for the purpose of illustrating the present invention and are not intended to be to scale.

In particular and referring to FIG. 1, there is shown an illustrative apparatus 10 for 3D printing an article 12, including but not limited to a food article, comprising a housing 14 comprising at least one gas inlet 16 and at least one gas outlet 18. The housing 14 defines a chamber 20 within the housing 14, which may be substantially isolated from an environment 32 external to the housing 14.

At least one 3D printing head 28, including a nozzle 30, is disposed within the chamber 20, operable for printing the article 12. The printing head 28 is movable within the chamber 20 to produce the article 12. The at least one gas inlet 16 is in fluid communication with a source 22 of a protective gas, optionally wherein a valve 24 (or other flow control device) is disposed within the flow path or pipe 21 to control a flow of the protective gas from the source 22 into the chamber 20.

The at least one gas outlet 18 is in fluid communication with the external environment 32 for exhausting gas from the chamber 20, such that, during use of the apparatus 10, an internal environment of the chamber 20 includes substantially only the protective gas, optionally wherein a valve 26 (or other flow control device) is disposed within the flow path or pipe 23 to control the flow of gas out of the chamber 20.

It will be understood that the embodiments described herein are merely exemplary, and that one skilled in the art may make variations and modifications without departing from the spirit and scope of the present invention. All such variations and modifications are intended to be included within the scope of the present invention as described and claimed herein. Further, all embodiments disclosed are not necessarily in the alternative, as various embodiments of the present invention may be combined to provide the desired result.

### List of reference signs

- 10: apparatus
- 12: article, in particular food article
- 14: housing
- 16: gas inlet
- 18: gas outlet
- 20: cham ber
- 21: flow path or pipe from source of protective gas 22 to chamber 20
- 22: source of protective gas
- 23: flow path or pipe from gas outlet 18
- 24: flow control device, in particular valve, in flow path or pipe 21
- 26: flow control device, in particular valve, in flow path or pipe 23
- 28: 3D printing head
- 30: nozzle
- 32: environment, in particular external environment

## Claims

1. An apparatus (10) for 3D printing an article (12), in particular a food article, comprising:
- a housing (14) comprising at least one gas inlet (16), the housing (14) defining a chamber (20) therein substantially isolated from an external environment (32);
- at least one 3D printing head (28) disposed within the chamber (20) for 3D printing the article (12) within the chamber (20); and
- a source (22) of a protective gas in fluid communication with the at least one gas inlet (16) for being introduced into the chamber (20) in an amount sufficient to displace atmosphere in the chamber (20) and to protect the article (12) from detrimental effects of the displaced atmosphere.

2. The apparatus according to claim 1, further comprising at least one gas outlet (18).

3. The apparatus according to claim 2, wherein the at least one gas outlet (18) is in fluid communication with the chamber (20) and the external environment (32) for exhausting gas from the chamber (20) such that the chamber (20) includes substantially only the protective gas.

4. The apparatus according to at least one of claims 1 to 3, wherein the protective gas comprises at least one inert gas.

5. The apparatus according to at least one of claims 1 to 4, wherein the protective gas comprises at least one of argon, nitrogen, or carbon dioxide.

6. The apparatus according to claim 5, wherein the protective gas comprises from 0% to about 100% argon, from 0% to about 100% nitrogen, and from 0% to about 30% carbon dioxide, by volume based on the total volume of the protective gas.

7. The apparatus according to claim 6, wherein at least about 70% by volume of the protective gas comprises at least one of argon or nitrogen.

8. The apparatus according to at least one of claims 1 to 7, wherein the temperature of the protective gas is from about 2°C to about 25°C.

9. The apparatus according to at least one of claims 1 to 8, wherein the protective gas comprises at least one suspended liquid and/or at least one suspended solid.

10. A method of 3D printing an article (12), in particular a food article, comprising:
- performing a 3D printing operation for producing the article (12);
- substantially isolating the 3D printing operation and the article (12) from an external environment (32); and
- providing a protective gas to the 3D printing operation for surrounding the article (12) with substantially only the protective gas for protecting said article (12).

11. The method according to claim 10, wherein the protective gas comprises at least one inert gas.

12. The method according to claim 10 or 11, wherein the protective gas comprises at least one of argon, nitrogen, or carbon dioxide.

13. The method according to claim 12, wherein the protective gas comprises from 0% to about 100% argon, from 0% to about 100% nitrogen, and from 0% to about 30% carbon dioxide, by volume based on the total volume of the protective gas, in particular at least about 70% by volume of the protective gas comprising at least one of argon or nitrogen.

14. The method according to at least one of claims 10 to 13, wherein the temperature of the protective gas is from about 2°C to about 25°C.

15. The method according to at least one of claims 10 to 14, wherein the protective gas comprises at least one suspended liquid and/or at least one suspended solid.
